# EUROPEAN PATENT SPECIFICATION

(11) **EP 3 342 548 B1**
(45) Date of publication and mention of the grant of the patent: **27.10.2021**
(21) Application number: 17210631.2
(22) Date of filing: 27.12.2017
(51) Int. Cl.: B25J 9/16

(54) **ROBOT SURVEILLANCE SYSTEM**
ROBOTERÜBERWACHUNGSSYSTEM
SYSTÈME DE SURVEILLANCE DE ROBOT

(30) Priority: 28.12.2016 TW 105143466
(43) Date of publication of application: 04.07.2018
(73) Proprietor: H.P.B Optoelectronic Co., Ltd., Taichung City 428 (TW)
(72) Inventor: Hsu, Hsuan-Yueh, 428 Taichung City (TW); Fu, Wei-Siang, 428 Taichung City (TW); Lin, Yi-Hsing, 428 Taichung City (TW)
(74) Representative: Straus, Alexander

(56) References cited:
- US-A1- 2015 120 056
- US-A1- 2015 185 322
- US-A1- 2015 290 808

## Description

### CROSS-REFERENCE TO RELATED APPLICATION

This application claims the priority of Taiwanese patent application No. 105143466, filed on December 28, 2016.

### BACKGROUND OF THE INVENTION

### 1. Field of the Invention

The present invention generally relates to a robot surveillance system, and more specifically to a robot surveillance system for controlling a proceeding direction of a robot by detecting change of the specific optical pattern on an object to implement a function of spatial security and surveillance.

### 2. The Prior Arts

The cleaning robot in the prior arts is an automatic cleaning device, which freely moves without any control of the user. For example, the cleaning robot can move around the indoor space like house or office to remove dirty stuff (such as trash or dust) on the ground to the built-in container or box so as to implement effect of cleaning the indoor environment. Thus, the cleaning robot gradually becomes a must for the modern married couple working and busy all day. However, the traditional cleaning robot has some limitations in use. For example, all pieces of the indoor furniture are placed at various locations dependent on the user, and the arrangement possibly changes over time. If the indoor space has steps or regions with different heights, and the cleaning path of the cleaning robot is not updated, the cleaning robot still moves along the preset cleaning route and fails to implement effective cleaning for all preset regions. Or, the cleaning robot might even fall down or collide with surrounding articles. Thus, many researches trying to solve the problem of the proceeding course for the cleaning robot have been provided. One of the most popular utilizes a block device (or a so called a virtual wall) to control the cleaning robot to turn. Specifically, the virtual wall transmits a blocking signal, and the cleaning robot receives the blocking signal to move backward or obliquely so as to avoid collision or falling down.

While the above method can prevent the cleaning robot from colliding with the surrounding object or falling down steps, it is another problem that if a gap between two objects is wide enough for the cleaning robot to pass, the cleaning robot still moves into the gap between two objects, but fails to find the correct path to leave the gap. To solve this problem, the robot is provided with a plurality of cameras or ultrasonic wave sensors to determine the objects in front. However, the ultrasonic wave sensor fails to effectively determine if any slight bump object like an electric wire or network cable is placed on the floor. As a result, the robot easily gets entangled and tightly stuck by the wire. Particularly, the ultrasonic wave sensor is expensive, and the process of installation is quite complicated.

US patent application 2015/0120056 discloses a mobile robot surveillance system for detecting an obstacle using an optical pattern which changes when it is incident upon a stationary object, the system calculating the distance from the obstacle based upon the detected pattern. US patent application 2015/0290808 discloses a robot surveillance system with remote analysis.

### SUMMARY OF THE INVENTION

The primary objective of the present invention is to provide a robot surveillance system, and more specifically to a robot surveillance system for controlling a traveling direction of a robot by detecting change of the specific optical pattern on an object to implement a function of spatial security and surveillance. The robot surveillance system of the present invention utilizes a specific hardware to incorporate the image capture unit with the optical pattern emitted by the light-emitting unit for providing the robot with the visual module. In other words, the optical pattern according to the image captured by the image capture unit changes because the robot is moving and about to collide with the stationary object like a hump or recess, the image processing unit recognizes and confirms that the stationary object is present, and controls the robot to turn so as to instantly avoid collision or falling down. In particular, the present invention can detect the moving object in the space by means of motion detection to effectively implement spatial security and surveillance, thereby greatly decreasing the cost of hardware and manpower, improving precision of detection and surveillance, and providing instant warning.

To fully meet the above objective, the present invention provides a robot surveillance system adapted to perform surveillance of a robot that moves freely without control of a user, as set out in the appended set of claims. The at least one light-emitting unit is provided on an outer part of a robot, and each light-emitting unit emits a light beam, which comprises an optical pattern incident on and shown by at least one stationary object or at least one moving object . In particular, the optical pattern changes dependent on the stationary object or the moving object. The image capture unit is provided on the outer part of the robot, and comprises an optical lens and a photo-sensing device connected together. The optical lens captures an image of the stationary or moving object to cause the photo-sensing device to form a captured image of the optical pattern from the stationary or moving object. The image processing unit is electrically connected to the image capture unit for receiving the captured image of the image capture unit. The image processing unit comprises a detection module, a recognition module, and a motion detection module. The detection module detects the optical pattern from the image capture unit. When the optical pattern changes due to the stationary object, a distance away from the stationary object is calculated and a first signal is generated and transferred. When a comparison result shows that the image is not consistent is confirmed by the recognition module examining and comparing information of the image from the image capture unit, a second signal is generated and transferred. When the motion detection module detects the moving object in the image, a third signal is generated and transferred. The turning control unit is electrically connected to the detection module for receiving the first signal of the detection module to control the robot to turn to avoid the stationary object. The wireless transceiver unit is electrically connected to the recognition module and the motion detection module for receiving the image, the second signal, and the third signal from the recognition module and the motion detection module to wirelessly transfer to a user at a remote surveillance device through a wireless communication protocol. The light-emitting unit is a flickering light source, having a flickering frequency the same as an image capture frequency of the image capture unit. The detection module of the image processing unit examines and compares differences between two successive images captured by the image capture unit to identify change of the optical pattern.

As mentioned above for the system of the present invention, the at least one light-emitting unit may be one of a laser, a light-emitting diode, and a luminary for emitting the light beam.

Also, the optical pattern may be one of a grid, a straight line, and dots regularly arranged.

The stationary object may be at least one of an object placed on the ground, a recess of the ground, and a hump of the ground.

The optical lens may be one of a fish-eye lens, a wide-angle lens, and a standard lens.

The photo-sensing device may be one of a charge coupled device (CCD) and a complementary metal oxide semiconductor (CMOS).

The recognition mode may read the information of the image through means of face recognition, bar code recognition, or pattern recognition, and compares with a plurality of built-in comparison data in the recognition module.

The recognition module further may comprise a storage module for storing the plurality of built-in comparison data.

The motion detection module may employ means of object motion detection, light flow detection, or object outline detection to detect the moving object.

The communication protocol may be at least one of Bluetooth communication protocol, infrared communication protocol, near-field communication (NFC), wireless local area networks (WLAN), WiGig, Zigbee, Wireless USB, ultra-wide band (UWB), and WiFi for providing the wireless transceiver unit with a function of communication with the remote surveillance device.

The remote surveillance device may be one of a mobile communication device, a remote device, and a computer device.

With this, the robot surveillance system of the present invention utilizes the specific hardware to incorporate the image capture unit with the optical pattern emitted by the light-emitting unit for providing the cleaning robot with the visual module. That is, the optical pattern according to the image captured by the image capture unit changes because the cleaning robot is moving and about to collide with the stationary object like a hump or recess, the image processing unit recognizes and confirms that the stationary object is present, and controls the robot to turn so as to instantly avoid collision or falling down. Thus, the present invention overcomes the issue that the traditional robot needs expensive laser radar or ultrasonic wave to avoid collision, and implements the advantage of reduced cost for hardware. Additionally, the robot surveillance system of the present invention provides the image capture unit and the at least light-emitting unit emitting the optical pattern in pair as the surveillance module of various robots, and monitors at least one moving object by means of motion object detection, light flow detection, and object outline detection so as to effectively implement spatial security and image transfer. As a result, the advantage of more precise detection/ surveillance and instant warning is achieved. Further, the present invention employs means of image capture, detection, and identification like face recognition, bar code recognition, or pattern recognition to deeply patrol around a large scale factory or residence building, and identify strangers invading the factory or the building. Thus, the advantages of reducing of the manpower cost of security and instantly informing/warning are obtained. Finally, the present invention utilizes the change of the optical pattern emitted by the light-emitting unit to detect any object on the ground like electric wire or cable, thereby effectively overcoming the problem that the traditional cleaning robot fails to exactly detect the height of the hump on the ground and gets stuck, leading to the wastage of lots of power. The present invention can avoid any obstacle on the ground and save power consumption.

### BRIEF DESCRIPTION OF THE DRAWINGS

The present invention will be apparent to those skilled in the art by reading the following detailed description of a preferred embodiment thereof, with reference to the attached drawings, in which:
**FIG. 1** is a view showing the functional blocks of the robot surveillance system according to the embodiment of the present invention; and
**FIG. 2** is a view showing one exemplary application of the robot surveillance system of the present invention.

### DETAILED DESCRIPTION OF THE PREFERRED EMBODIMENT

The accompanying drawings are included to provide a further understanding of the invention, and are incorporated in and constitute a part of this specification. The drawings illustrate embodiments of the invention and, together with the description, serve to explain the principles of the invention.

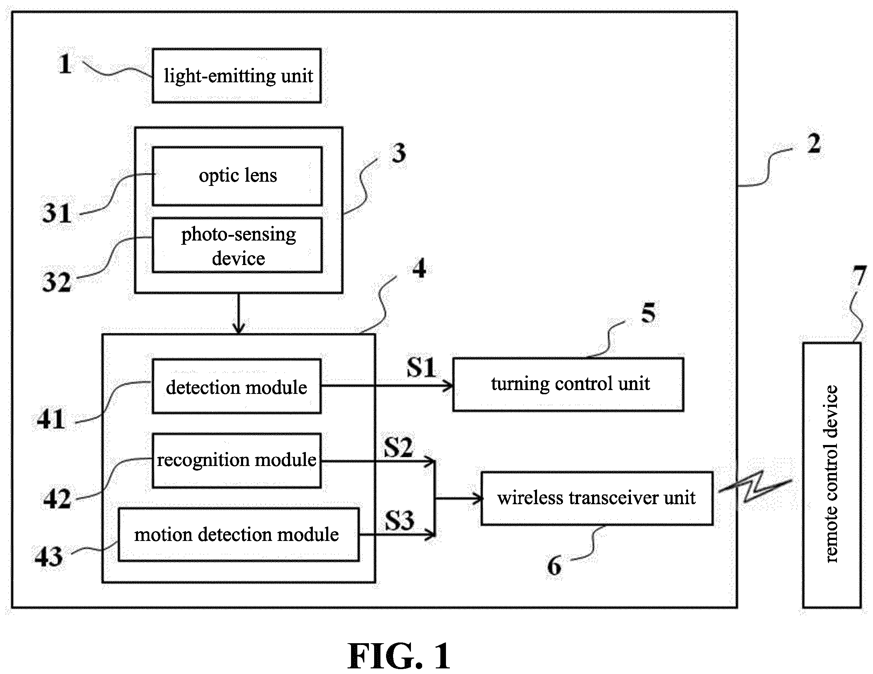

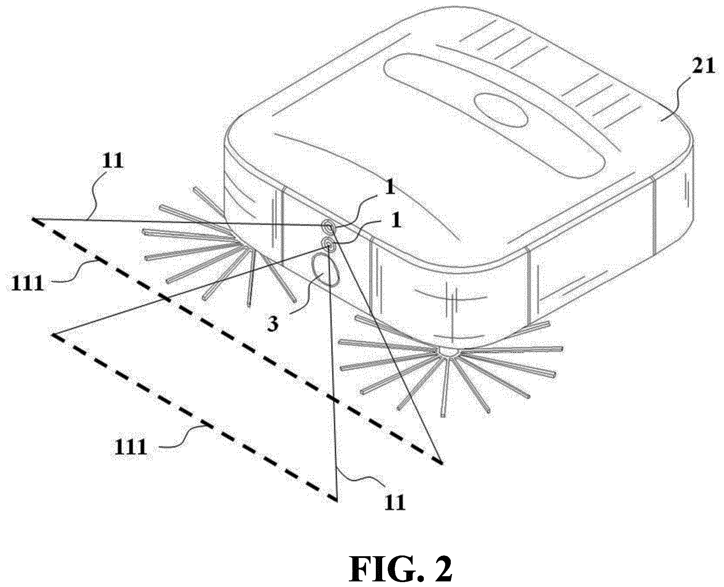

Please refer to FIGs. 1 and 2 illustrating functional blocks and one exemplary application of the robot surveillance system according to the embodiment of the present invention, respectively. The robot surveillance system of the present invention is intended to prevent a robot 2 from falling down or collision by detecting a change of an optical pattern 111, and implement detection of at least one moving object invading the concerned region in space to achieve the aim of security and surveillance. In one embodiment of the present invention, the robot 2 is (but not limited to) a cleaning robot 21 for cleaning the indoor environment of a house or office, and security/surveillance. In addition, in another embodiment of the present invention, the robot 2 is (but not limited to) a patrol robot for patrolling around a building or a large scale factory, and further monitoring any undesired person invading the specific region. Specifically, the robot surveillance system of the present invention generally comprises at least one light-emitting unit 1, an image capture unit 3, an image processing unit 4, a turning control unit 5, and a wireless transceiver unit 6.

The at least one light-emitting unit 1 is provided on the outer part of the robot 2, and each light-emitting unit 1 emits a light beam 11 comprising an optical pattern 111, which is incident on and shown by at least one stationary object or at least one moving object in space. The optical pattern will change dependent on the stationary object or the moving object. In addition, the at least one light-emitting unit 1 is one of a laser, a light-emitting diode, and a luminary for emitting the light beam. Also, the optical pattern 11 is one of a grid, a straight line, and dots regularly arranged, and the stationary object is at least one of an object placed on the ground, a recess of the ground, and a hump of the ground. In one embodiment of the present invention, the cleaning robot 21 is implemented by a robot 2, which has an outer part provided with two adjacent lasers as the light-emitting units 1. Specifically, the two light beams 11 emitted by two lasers comprises the optical patterns like straight lines. Further, one of the two light beams 11 horizontally travels forward in parallel such that the object standing on the ground or a hump of the ground as the stationary object is detected by use of the straight line pattern. The other light beam 11 of the light-emitting unit 1 oblique travels toward the ground such that the stationary object standing in a recess of the ground is detected by use of the straight line pattern. However, it should be noted that the above stationary objects and the optical patterns 111 are only exemplary for clear explanation, and not intended to limit the scope of the present invention, For those who are skilled in this technical field, all the types of the optical pattern 111 performing the similar feature of the present invention are thus included in the scope of the present invention.

The image capture unit 3 is provided on the outer part of the robot 2, and comprises an optical lens 31 and a photo-sensing device 32 connected to the optical lens 31. The optical lens 31 is configured to capture an image of the stationary or moving object to cause the photo-sensing device 32 to form a captured image based on the optical pattern from the stationary or moving object. Further, the optical lens 31 is one of a fish-eye lens, a wide-angle lens, and a standard lens, and the photo-sensing device 32 is one of a charge coupled device (CCD) and a complementary metal oxide semiconductor (CMOS). In the embodiment of the present invention, the optical lens 31 and the photo-sensing device 32 are implemented by the fish-eye lens and the CCD, respectively. The image capture unit 3 is provided on the outer part of the robot 2 with respect to the light-emitting unit 1, and the image of the optical pattern 111 is formed on the photo-sensing device 32.

The image processing unit 4 is electrically connected to the image capture unit 3 for receiving the image captured by the image capture unit 3, and comprises a detection module 41, a recognition module 42, and a motion detection module 43 The detection module 41 detects the optical pattern 111 in the image. When the optical pattern 111 changes due to the stationary object, a distance away from the stationary object is calculated and a first signal S1 is generated and transferred by the detection module 41. The recognition module 42 examines and compares information of the image from the image capture unit 3. When a comparison result of the image shows that the image is not consistent, the recognition module 42 generates and transfers a second signal S2. The motion detection module 43 detects the moving object in the image to generate and transfer a third signal S3. Moreover, the recognition mode 42 reads the information of the image through means of face recognition, bar code recognition, or pattern recognition, and compares with a plurality of built-in comparison data in the recognition module 42. The recognition mode 42 further comprises a storage module (not shown) for storing the plurality of built-in comparison data. The motion detection module 43 employs means of object motion detection, light flow detection, or object outline detection to detect the moving object. In the embodiment of the present invention, the detection module 41 of the image processing unit 4 is configured for receiving the image captured by the image capture unit 3, and determines if the optical pattern 111 is incident on the stationary object and thus changes. If the optical pattern 111 changes, the detection module 41 issues the first signal S1 and calculates the distance away from the stationary object. For example, the detection module 42 is suitably applicable to the patrol robot of the second embodiment. When the patrol robot is configured to patrol residence building or a large scale factory, means of bar code identification is employed to compare the built-in comparison data with the bar code on the person such as employee ID. When the comparison result shows an inconsistency, the recognition module 42 transfers the person's image and the second signal S2, and at the same time, the motion detection module 43 utilizes means of light flow detection to implement the goal of security and surveillance by detecting the moving object in the space invading the secured region, and then transfers the image and the third signal S3.

The turning control unit 5 is electrically connected to the detection module 41 for receiving the first signal S1 of the detection module 41 to control the robot 2 to correctly turn to avoid the detected stationary object. In an embodiment of the present invention, when the detection module 41 receives the captured image from the image capture unit 3 and confirms that the optical pattern 111 incident on the stationary object changes, the detection module 41 issues the first signal S1 to the turning control unit 5, thereby controlling the robot 2 to appropriately turn and preventing risk of colliding with the stationary object.

The wireless transceiver unit 6 is electrically connected to the recognition module 42 and the motion detection module 43. Specifically, the wireless transceiver unit 6 receives the image, the second signal S2, and the third signal S3 from the recognition module 42 and the motion detection module 43 to wirelessly transfer to a user at a remote surveillance device 7 through a wireless communication protocol. Additionally, the communication protocol is at least one of Bluetooth communication protocol, infrared communication protocol, near-field communication (NFC), wireless local area networks (WLAN), WiGig, Zigbee, Wireless USB, ultra-wide band (UWB), and WiFi for providing the wireless transceiver unit 6 with a function of communication with the remote surveillance device 7. Moreover, the remote surveillance device 7 is one of a mobile communication device, a remote device, and a computer device. In the embodiment of the present invention, when the recognition module 42 confirms the comparison result is not consistent, the image of the undesired person and the second signal S2 are transferred, and the wireless transceiver unit 6 employs the wireless communication protocol to further transfer the image and the second signal S2 to the mobile communication device by the user as the remote surveillance device 7 so as to warn or inform related persons of the situation that the residence building or the factory is invaded by some undesired person. Further, when the motion detection module 43 uses means of light flow detection to detect the moving object in the space, the image and the third signal S3 are transferred to the wireless transceiver 6. Then, the wireless transceiver 6 further transfers the image of the moving object to the remote surveillance device 7 of the user, thereby informing the related persons of the invasion event caused by the moving object, and at the same time, storing the image of the moving object.

Furthermore, according to the invention, the light-emitting unit 1 is a flickering light source having a flickering frequency, which is the same as an image capture frequency of the image capture unit 3. Also, according to the invention, the detection module 41 of the image processing unit 4 examines and compares the differences between two successive images captured by the image capture unit 3 to identify changes of the optical pattern 111. In the third embodiment of the present invention, when the light is emitted by the light-emitting unit 1 in the flicker mode, the image capture unit 3 fetches one image of the stationary object and the optical pattern 111 on the stationary object, and when light is not emitted at the next moment, the current image of the stationary object and the optical pattern 111 is fetched. The detection module 41 performs subtraction of the above two successive images to extract only the part of the optical pattern 111 in the image for more precisely detecting and identifying the change of the optical pattern 111 and more strictly controlling the robot 2 to turn.

Next, some actual applications for the robot surveillance system are described below to further help well understand the key features provided by the present invention, without limiting the scope of the present invention. When the user intends to clean the area, the cleaning robot 21 provided with the robot surveillance system of the present invention is helpful because the cleaning robot 21 is prevented from colliding with some stationary object or falling down. Further, the cleaning robot 21 can surely monitor a moving object in the space by means of motion detection to effectively performing security and surveillance of the desired region, thereby providing the advantage of greatly decreasing cost of hardware and manpower, improving precision of detection and surveillance, and implementing instant warning. First, the at least one light-emitting unit 1 is prepared, and provided on the outer part of the robot 2. Each light-emitting unit 1 implemented by the laser emits a laser beam 11 comprising the specific optical pattern 111, which is incident on and shown by at least one stationary object or at least one moving object in space, As a result, the optical pattern 111 changes due to the stationary object or the moving object. Then, the image capture unit 3 is prepared and provided on the outer part of the robot 2. The image capture unit 3 comprises the optical lens 31 and the photo-sensing device 32 connected together. The optical lens 31 is intended to capture the image of the stationary or moving object to cause the photo-sensing device 32 to form the captured image of the optical pattern 111 on the stationary or moving object. Next, the image processing unit 4 electrically connected to the image capture unit 3 is prepared. The detection module 41 of the image processing unit 4 detects and identifies the optical pattern 111 transferred from the image capture unit 3, When the optical pattern 111 changes due to a stationary object, the distance away from the stationary object is calculated and the first signal S1 is thus generated and transferred to the turning control unit 5 so as to correctly control the robot 2 to turn and avoid the stationary object. Finally, the motion detection module 43 built-in by the image processing unit 4 is prepared. When the moving object in the space is detected by the motion detection module 43 through means of light flow detection, the image and the third signal S3 are transferred to the wireless transceiver unit 6. Then, the wireless transceiver unit 6 transfers the received image to the remote surveillance device 7 employed by the user, such as alike the mobile communication device, so as to inform the related persons of the information that invasion is resulted in by the moving object and instantly store the image. With this, a specific hardware is designed by the system of the present invention to incorporate the image capture unit 3 with the optical pattern 111 emitted by the light-emitting unit 1, and intended to provide the cleaning robot 21 with the visual module. In other words, when the optical pattern 111 according to the image captured by the image capture unit 3 changes because the cleaning robot 21 is moving and about to collide with the stationary object, the image processing unit 4 recognizes and confirms that the stationary object is present, and controls the cleaning robot 21 to turn so as to instantly avoid collision or falling down. Therefore, the advantage of greatly decreasing cost of hardware is indeed implemented.

From the above, it is clear that the robot surveillance system of the present invention implements the desired effects through the above embodiments, and is not disclosed before the application date, thereby meeting all the regulations of the patent law.

Although the present invention has been described with reference to the preferred embodiments thereof, it is apparent to those skilled in the art that a variety of modifications and changes may be made without departing from the scope of the present invention which is defined by the appended claims.

## Claims

1. A robot surveillance system adapted to perform surveillance of a robot that moves freely without control of a user, comprising:
at least one light-emitting unit (1) provided on an outer part of a robot (2), each light-emitting unit emitting a light beam (11) comprising an optical pattern (111) incident on and shown by at least one stationary object or at least one moving object, the optical pattern changing dependent on the stationary object or the moving object;
an image capture unit (3) provided on the outer part of the robot (2), comprising an optical lens (31) and a photo-sensing device (32) connected together, the optical lens capturing an image of the stationary or moving object to cause the photo-sensing device to form a captured image of the optical pattern from the stationary or moving object;
an image processing unit (4) electrically connected to the image capture unit (3) for receiving the captured image of the image capture unit, the image processing unit comprising a detection module (41), a recognition module (42), and a motion detection module (43), the detection module detecting the optical pattern (111) from the image capture unit (3), calculating a distance away from the stationary object and
generating and transferring a first signal (S1) when the optical pattern (111) changes due to the stationary object, the recognition module examining and comparing information of the image from the image capture unit, and generating and transferring a second signal (S2) when a comparison result of the image shows inconsistency, the motion detection module (43) detecting the moving object in the image to generate and transfer a third signal (S3);
a turning control unit (5) electrically connected to the detection module (41) for receiving the first signal (S1) of the detection module to control the robot (2) to turn to avoid the stationary object; and
a wireless transceiver unit (6) electrically connected to the recognition module (42) and the motion detection module (43) for receiving the image, the second signal (S2), and the third signal (S3) from the recognition module (42) and the motion detection module to wirelessly transfer to a user at a remote surveillance device (7) through a wireless communication protocol,
wherein the light-emitting unit (1) is a flickering light source, having a flickering frequency which is the same as an image capture frequency of the image capture unit (3)
wherein the detection module (41) of the image processing unit (4) examines and compares differences between two successive images captured by the image capture unit (3) to identify change of the optical pattern.

2. The robot surveillance system as claimed in claim 1, wherein the at least one light-emitting unit (1) is one of a laser, a light-emitting diode, and a luminary for emitting the light beam.

3. The robot surveillance system as claimed in claim 1, wherein the optical pattern (111) is one of a grid, a straight line, and dots regularly arranged.

4. The robot surveillance system as claimed in claim 1, wherein the stationary object is at least one of an object placed on the ground, a recess of the ground, and a hump of the ground.

5. The robot surveillance system as claimed in claim 1, wherein the optical lens (31) is one of a fish-eye lens, a wide-angle lens, and a standard lens.

6. The robot surveillance system as claimed in claim 1, wherein the photo-sensing device (32) is one of a charge coupled device (CCD) and a complementary metal oxide semiconductor (CMOS).

7. The robot surveillance system as claimed in claim 1, wherein the recognition module (42) reads the information of the image through means of face recognition, bar code recognition, or pattern recognition, and compares with a plurality of built-in comparison data in the recognition module.

8. The robot surveillance system as claimed in claim 7, wherein the recognition module (42) further comprises a storage module for storing the plurality of built-in comparison data.

9. The robot surveillance system as claimed in claim 1, wherein the motion detection module (43) employs means of object motion detection, light flow detection, or object outline detection to detect the moving object.

10. The robot surveillance system as claimed in claim 1, wherein the communication protocol is at least one of Bluetooth communication protocol, infrared communication protocol, near-field communication (NFC), wireless local area networks (WLAN), WiGig, Zigbee, Wireless USB, ultra-wide band (UWB), and WiFi for providing the wireless transceiver unit with a function of communication with the remote surveillance device (7).

11. The robot surveillance system as claimed in claim 10, wherein the remote surveillance device (7) is one of a mobile communication device, a remote device, and a computer device.

## Patentansprüche

1. Roboterüberwachungssystem, welches angepasst ist, die Überwachung eines Roboters durchzuführen, der sich ohne Steuerung durch einen Benutzer frei bewegt, welches umfasst:
mindestens eine lichtemittierende Einheit (1), die an einem äußeren Teil eines Roboters (2) vorgesehen ist, wobei jede lichtemittierende Einheit einen Lichtstrahl (11) emittiert, der ein optisches Muster (111) umfasst, das auf mindestens ein stationäres Objekt oder mindestens ein sich bewegendes Objekt auftrifft und von diesem entsprechend gezeigt wird, wobei sich das optische Muster in Abhängigkeit von dem stationären Objekt oder dem sich bewegenden Objekt ändert;
eine Bilderfassungseinheit (3), die an dem äußeren Teil des Roboters (2) vorgesehen ist und eine optische Linse (31) und eine Fotoerfassungsvorrichtung (32) umfasst, die miteinander verbunden sind, wobei die optische Linse ein Bild des stationären oder bewegten Objekts erfasst, um die Fotoerfassungsvorrichtung zu veranlassen, ein erfasstes Bild des optischen Musters von dem stationären oder bewegten Objekt zu bilden;
eine Bildverarbeitungseinheit (4), die elektrisch mit der Bilderfassungseinheit (3) verbunden ist, um das erfasste Bild der Bilderfassungseinheit zu empfangen, wobei die Bildverarbeitungseinheit ein Erfassungsmodul (41), ein Erkennungsmodul (42) und ein Bewegungserfassungsmodul (43) umfasst, wobei das Erfassungsmodul das optische Muster (111) von der Bilderfassungseinheit (3) erfasst, einen Abstand von dem stationären Objekt berechnet und ein erstes Signal (S1) erzeugt und überträgt, wenn sich das optische Muster (111) aufgrund des stationären Objekts ändert, das Erkennungsmodul Informationen des Bildes von der Bilderfassungseinheit untersucht und vergleicht und ein zweites Signal (S2) erzeugt und überträgt, wenn ein Vergleichsergebnis des Bildes Inkonsistenz zeigt, das Bewegungserfassungsmodul (43) das sich bewegende Objekt in dem Bild erfasst, um ein drittes Signal (S3) zu erzeugen und zu übertragen;
eine Abbiegesteuerungseinheit (5), die elektrisch mit dem Erfassungsmodul (41) verbunden ist, um das erste Signal (S1) des Erfassungsmoduls zu empfangen, um den Roboter (2) zu steuern, sich zu drehen, um dem stationären Objekt auszuweichen; und
eine drahtlose Übertragungseinheit (6), die elektrisch mit dem Erkennungsmodul (42) und dem Bewegungserfassungsmodul (43) verbunden ist, um das Bild, das zweite Signal (S2) und das dritte Signal (S3) von dem Erkennungsmodul (42) und dem Bewegungserfassungsmodul zu empfangen, um es über ein drahtloses Kommunikationsprotokoll drahtlos an einen Benutzer an einer Fernüberwachungsvorrichtung (7) zu übertragen;
worin die lichtemittierende Einheit (1) eine flackernde Lichtquelle ist, die eine Flackerfrequenz aufweist, die die gleiche ist wie eine Bilderfassungsfrequenz der Bilderfassungseinheit (3);
wobei das Erfassungsmodul (41) der Bildverarbeitungseinheit (4) Unterschiede zwischen zwei aufeinanderfolgenden, von der Bilderfassungseinheit (3) aufgenommenen Bildern untersucht und vergleicht, um eine Änderung des optischen Musters zu erkennen.

2. Roboterüberwachungssystem nach Anspruch 1, worin die mindestens eine lichtemittierende Einheit (1) eines von einem Laser, einer lichtemittierenden Diode oder einer Leuchte zum Emittieren des Lichtstrahls ist.

3. Roboterüberwachungssystem nach Anspruch 1, worin das optische Muster (111) eines von einem Gitter, einer geraden Linie und regelmäßig angeordneten Punkten ist.

4. Roboterüberwachungssystem nach Anspruch 1, worin das stationäre Objekt mindestens eines von einem auf dem Boden platzierten Objekt, einer Bodenvertiefung oder einer Bodenerhebung ist.

5. Roboterüberwachungssystem nach Anspruch 1, worin die optische Linse (31) eine Fischaugenlinse, eine Weitwinkellinse oder eine Standardlinse ist.

6. Roboterüberwachungssystem nach Anspruch 1, worin die Fotoerfassungsvorrichtung (32) eine ladungsgekoppelte Vorrichtung (CCD) oder ein komplementärer Metalloxidhalbleiter (CMOS) ist.

7. Roboterüberwachungssystem nach Anspruch 1, wobei das Erkennungsmodul (42) die Informationen des Bildes mittels Gesichtserkennung, Strichcodeerkennung oder Mustererkennung liest und mit mehreren integrierten Vergleichsdaten im Erkennungsmodul vergleicht.

8. Roboterüberwachungssystem nach Anspruch 7, worin das Erkennungsmodul (42) ferner ein Speichermodul zum Speichern der mehreren integrierten Vergleichsdaten umfasst.

9. Roboterüberwachungssystem nach Anspruch 1, wobei das Bewegungserfassungsmodul (43) Mittel zur Objektbewegungserkennung, Lichtflusserkennung oder Objektumrisserkennung verwendet, um das sich bewegende Objekt zu erkennen.

10. Roboterüberwachungssystem nach Anspruch 1, worin das Kommunikationsprotokoll mindestens eines von einem Bluetooth-Kommunikationsprotokoll, einem Infrarot-Kommunikationsprotokoll, einer Nahfeldkommunikation (NFC), einem drahtlosen lokalen Netzwerk (WLAN), WiGig, Zigbee, drahtlosem USB, einem Ultrabreitband (UWB) und WiFi ist, um der drahtlosen Übertragungseinheit eine Funktion zur Kommunikation mit der Fernüberwachungsvorrichtung (7) bereitzustellen.

11. Roboterüberwachungssystem nach Anspruch 10, worin die Fernüberwachungsvorrichtung (7) eine von einer mobilen Kommunikationsvorrichtung, einer Fernbedienungsvorrichtung oder einer Computervorrichtung ist.

## Revendications

1. Système de surveillance de robot adapté pour effectuer la surveillance d'un robot qui se déplace librement sans contrôle d'un utilisateur, comprenant:
au moins une unité d'émission de lumière (1) prévue sur une partie extérieure d'un robot (2), chaque unité d'émission de lumière émettant un faisceau lumineux (11) comprenant un motif optique (111) incident sur et montré par au moins un objet stationnaire ou au moins un objet mobile, le motif optique changeant en fonction de l'objet stationnaire ou de l'objet mobile;
une unité de capture d'image (3) prévue sur la partie extérieure du robot (2), comprenant une lentille optique (31) et un dispositif de photodétection (32) connectés ensemble, la lentille optique capturant une image de l'objet stationnaire ou mobile pour amener le dispositif de photodétection à former une image capturée du motif optique à partir de l'objet stationnaire ou mobile;
une unité de traitement d'image (4) connectée électriquement à l'unité de capture d'image (3) pour recevoir l'image capturée de l'unité de capture d'image, l'unité de traitement d'image comprenant un module de détection (41), un module de reconnaissance (42), et un module de détection de mouvement (43), le module de détection détectant le motif optique (111) de l'unité de capture d'image (3), calculer une distance à partir de l'objet stationnaire et générer et transférer un premier signal (S1) lorsque le motif optique (111) change en raison de l'objet stationnaire, le module de reconnaissance examinant et comparant les informations de l'image provenant de l'unité de capture d'image, et générant et transférant un deuxième signal (S2) lorsqu'un résultat de comparaison de l'image montre une incohérence, le module de détection de mouvement (43) détectant l'objet en mouvement dans l'image pour générer et transférer un troisième signal (S3);
une unité de commande de virage (5) connectée électriquement au module de détection (41) pour recevoir le premier signal (S1) du module de détection afin de commander au robot (2) de tourner pour éviter l'objet stationnaire; et
une unité d'émetteur-récepteur sans fil (6) connectée électriquement au module de reconnaissance (42) et au module de détection de mouvement (43) pour recevoir l'image, le deuxième signal (S2) et le troisième signal (S3) du module de reconnaissance (42) et du module de détection de mouvement pour les transférer sans fil à un utilisateur au niveau d'un dispositif de surveillance à distance (7) par le biais d'un protocole de communication sans fil;
dans lequel l'unité d'émission de lumière (1) est une source de lumière clignotante, ayant une fréquence de clignotement qui est la même qu'une fréquence de capture d'image de l'unité de capture d'image (3);
dans lequel le module de détection (41) de l'unité de traitement d'image (4) examine et compare les différences entre deux images successives capturées par l'unité de capture d'image (3) pour identifier le changement du motif optique.

2. Système de surveillance de robot selon la revendication 1, dans lequel la au moins une unité d'émission de lumière (1) est l'une parmi un laser, une diode électroluminescente, et un luminaire pour émettre le faisceau lumineux.

3. Système de surveillance de robot selon la revendication 1, dans lequel le motif optique (111) est l'un parmi une grille, une ligne droite et des points disposés régulièrement.

4. Système de surveillance de robot selon la revendication 1, dans lequel l'objet fixe est au moins l'un d'un objet placé sur le sol, d'un renfoncement du sol, et d'une bosse du sol.

5. Système de surveillance de robot selon la revendication 1, dans lequel la lentille optique (31) est l'une parmi une lentille à œil de poisson, une lentille grand angle, et une lentille standard.

6. Système de surveillance de robot selon la revendication 1, dans lequel le dispositif de photodétection (32) est l'un d'un dispositif à couplage de charge (CCD) et d'un semiconducteur à oxyde métallique complémentaire (CMOS).

7. Système de surveillance de robot selon la revendication 1, dans lequel le module de reconnaissance (42) lit les informations de l'image au moyen d'une reconnaissance de visage, d'une reconnaissance de code à barres ou d'une reconnaissance de motif, et les compare avec une pluralité de données de comparaison intégrées dans le module de reconnaissance.

8. Système de surveillance de robot selon la revendication 7, dans lequel le module de reconnaissance (42) comprend en outre un module de stockage pour stocker la pluralité de données de comparaison intégrées.

9. Système de surveillance de robot selon la revendication 1, dans lequel le module de détection de mouvement (43) utilise des moyens de détection de mouvement d'objet, de détection de flux lumineux, ou de détection de contour d'objet pour détecter l'objet en mouvement.

10. Système de surveillance de robot selon la revendication 1, dans lequel le protocole de communication est au moins l'un parmi le protocole de communication Bluetooth, le protocole de communication infrarouge, la communication en champ proche (NFC), les réseaux locaux sans fil (WLAN), WiGig, Zigbee, USB sans fil, bande ultra-large (UWB) et WiFi pour fournir à l'unité d'émetteur-récepteur sans fil une fonction de communication avec le dispositif de surveillance à distance (7).

11. Système de surveillance de robot selon la revendication 10, dans lequel le dispositif de surveillance à distance (7) est l'un parmi un dispositif de communication mobile, un dispositif à distance, et un dispositif informatique.
